# EUROPEAN PATENT APPLICATION

(11) **EP 2 242 260 A1**
(43) Date of publication of application: **20.10.2010**
(21) Application number: 09175349.1
(22) Date of filing: 09.11.2009
(51) Int. Cl.: H04N 5/445, H04N 5/50, H04N 5/00

(54) **Method for setting channels and broadcast receiving apparatus using the same**

(30) Priority: 14.04.2009 KR 20090032354
(71) Applicant: SAMSUNG ELECTRONICS CO., LTD., Suwon-si, Gyeonggi-do (KR)
(72) Inventor: KIM, Mun-seok, Suwon-si, Gyeonggi-do (KR)
(74) Representative: Brandon, Paul Laurence

(57) **Abstract**

A method for setting channels and a broadcast receiving apparatus using the same are provided. In the method, a channel is set by a broadcast receiving apparatus so as to correspond to at least one of an IP address and a domain name. Accordingly, a user can set IP addresses and domain names as channels on the broadcast receiving apparatus.

## Description

### CROSS-REFERENCE TO RELATED APPLICATIONS

This application claims priority from Korean Patent Application No. 10-2009-0032354, filed on April 14, 2009, in the Korean Intellectual Property Office, the disclosure of which is incorporated herein by reference in its entirety.

### BACKGROUND OF THE INVENTION

### I. Field of the Invention

Apparatuses and methods consistent with the present invention relate to a method for setting channels and a broadcast receiving apparatus using the same, and more particularly, to a method for setting channels of an Internet Protocol Television (IPTV) and a broadcast receiving apparatus using the same.

### 2. Description of the Related Art

As television (TV) technology improves, TVs are increasingly able to provide various services. In particular, as TVs are connected to the internet, Internet TV services called IPTV have developed.

As IPTV service has expanded, providers of IPTV service halve also expanded. Furthermore, a variety of services, other than the IPTV service, have been developed.

However, if general broadcasts and IPTV broadcasts are viewed through a TV, it is inconvenient for a user to change between a general broadcast and an IPTV broadcast.

Therefore, a method for setting IP channels and broadcast channels on a TV may permit a user to easily change between the IP channels and the broadcast channels on the TV.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a method for setting channels so that an input channel number can correspond to at least one of an input Internet Protocol (IP) address and domain name, and a broadcast receiving apparatus using the same.

According to an exemplary aspect of the present invention, there is provided a method for setting a channel at a broadcast receiving apparatus, the method including receiving a channel number, receiving at least one of an IP address and a domain name, and setting, by the broadcast receiving apparatus, the channel number to correspond to the at least one of the IP address and the domain name.

The method may further include searching a server corresponding to the at least one of the IP address and the domain name, determining whether the server corresponding to the at least one of the IP address and the domain name provides an image service, and setting the channel number to correspond to the at least one of the IP address and the domain name if it is determined that the server provides the image service.

The image service may be one of an Internet Protocol Television (IPTV) service and a streaming service.

The method may further include displaying a channel setting window including a channel number input box, a frequency input box, a bandwidth input box, an Internet Protocol (IP) address input box, and a domain name input box, wherein the receiving the channel number comprises receiving the channel number from an input device controlled by a user in the channel number input box, and wherein the receiving the at least one of the IP address and the domain name includes receiving the at least one of the IP address and the domain name from the input device in at least one of the IP address input box and the domain name input box, respectively.

The method may further include searching for a server corresponding to the at least one of the input IP address and the domain name in response to a search command input by the user if the channel number is input in the channel number input box and if the at least one of the IP address and the domain name is input in at least one of the IP address input box and the domain name input box, respectively, and determining whether the server corresponding to the at least one of the IP address and the domain name provides an image service if the server is found, wherein the setting the channel number comprises setting the channel number to correspond to the at least one of the IP address and the domain name if it is determined that the server provides the image service.

The method may further include, if the user enters the IP address in the IP address input box, automatically displaying a domain name corresponding to the input IP address in the domain name input box.

The method may further include, if the user enters the domain name in the domain name input box, automatically displaying an IP address corresponding to the input domain name in the IP address input box.

The method may further include, if the user enters at least one of the IP address and the domain name in at least one of the IP address input box and the domain name input box, respectively, deactivating the frequency input box and the bandwidth input box.

The method may further include receiving a frequency and a bandwidth, and in response to a search command input by the user, if the channel number is input in the channel number input box and if a frequency and a bandwidth is input in the frequency input box and the bandwidth input box, searching for a broadcast service provided in the frequency and the bandwidth, wherein the setting the channel number comprises setting the channel number to correspond to the frequency and the bandwidth if the broadcast service is provided in the frequency and the bandwidth.

The method may further include, if the user enters at least one of a frequency and a bandwidth in the frequency input box and the bandwidth input box, respectively, deactivating the IP address input box and the domain name input box.

The method may further include displaying a list of unused channel numbers that are not associated with at least one of an IP address and a domain name, and displaying a list of domain names that provide an image service, wherein the receiving the channel number comprises, if a user selects an unused channel number from the list of unused channel numbers, receiving the channel number corresponding to the selected unused channel number, and the receiving the at least one of the IP address and the domain name comprises, if the user selects a domain name from the list of domain names, receiving a domain name and an IP address corresponding to the selected domain name.

According to another exemplary aspect of the present invention, there is provided a broadcast receiving apparatus including a user manipulation unit which receives input from a user, and a control unit which receives a channel number and receives at least one of an IP address and a domain name as the input from the user manipulation unit, and sets the channel number to correspond to the at least one of the IP address and the domain name.

The control unit may search for a server corresponding to the at least one of the IP address and the domain name, determine whether the server corresponding to the at least one of the IP address and the domain name provides an image service, and may set the channel number to correspond to the at least one of the IP address and the domain name if it is determined that the server provides the image service.

The image service may be one of an Internet Protocol Television (IPTV) service and a streaming service.

The control unit may display a channel setting window including a channel number input box, a frequency input box, a bandwidth input box, an Internet Protocol (IP) address input box, and a domain name input box, display the channel number in the channel number input box, and display the at least one of the IP address and the domain name in at least one of the IP address input box and the domain name input box, respectively.

The control unit may search for a server corresponding to the at least one of the input IP address and the domain name in response to a search command input by the user if the channel number is input in the channel number input box and if the at least one of the IP address and the domain name is input in at least one of the IP address input box and the domain name input box, respectively, determine whether the server corresponding to the at least one of the IP address and the domain name provides an image service if the server is found, and set the channel number to correspond to the at least one of the IP address and the domain name if it is determined that the server provides the image service.

If the user enters the IP address in the IP address input box, the control unit may display a domain name corresponding to the input IP address in the domain name input box.

If the user enters the domain name in the domain name input box, the control unit may display an IP address corresponding to the input domain name in the IP address input box.

If the user enters at least one of the IP address and the domain name in the IP address input box and the domain name input box, respectively, the control unit may deactivate the frequency input box and the bandwidth input box.

The control unit may receive a frequency and a bandwidth as input from the user manipulation unit. In response to a search command input by the user, if the channel number is input in the channel number input box and if a frequency and a bandwidth is input in the frequency input box and the bandwidth input box, the control unit may search for a broadcast service provided in the frequency and the bandwidth, and set the channel number to correspond to the frequency and the bandwidth if the broadcast service is provided in the frequency and the bandwidth.

If the user enters at least one of a frequency and a bandwidth in at least one of the frequency input box and the bandwidth input box, respectively, the control unit may deactivate the IP address input box and the domain name input box.

The control unit may display a list of unused channel numbers that are not associated with at least one of an IP address and a domain name, and a list of domain names that provide an image service, and if a user selects an unused channel number from the list of unused channel numbers, the control unit receives the channel number corresponding to the selected unused channel number, and if the user selects a domain name from the list of domain names, the control unit receives a domain name and an IP address corresponding to the selected domain name.

### BRIEF DESCRIPTION OF THE DRAWINGS

The above and/or other aspects of the invention will be more apparent by describing certain exemplary embodiments of the present invention with reference to the accompanying drawings, in which:

FIG. 1 is a block diagram illustrating a detailed configuration of a TV according to an exemplary embodiment of the present invention,

FIG. 2 is a flowchart illustrating a method for setting channels according to an exemplary embodiment of the present invention;

FIG. 3 illustrate a screen displacing a channel setting window according to an exemplary embodiment of the present invention;

FIGS. 4A to 4D illustrate a process for searching and for setting a channel using an IP address and a domain name according to an exemplary embodiment of the present invention;

FIG. 5 illustrates a screen on which an IP address input box and a domain name input box are inactivated when a frequency and a bandwidth are input according to an exemplary embodiment of the invention;

FIG. 6 illustrate a screen displacing a channel list in which IP channels and broadcast channels are shown together according to an exemplary embodiment of the present invention;

FIG. 7 illustrates a screen displaying a channel list in which IP channels and broadcast channels are shown separately in different areas according to an exemplary embodiment of the present invention; and

FIG. 8 illustrates a screen displaying an available channel number list and a list of domain names of servers providing an image service according to an exemplary embodiment of the present invention,

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provide to assist in a comprehensive understanding of the invention. However, the present invention can be practiced without those specifically defined matters. Also, well-known functions or constructions are not described in detail since they would obscure the invention with unnecessary detail.

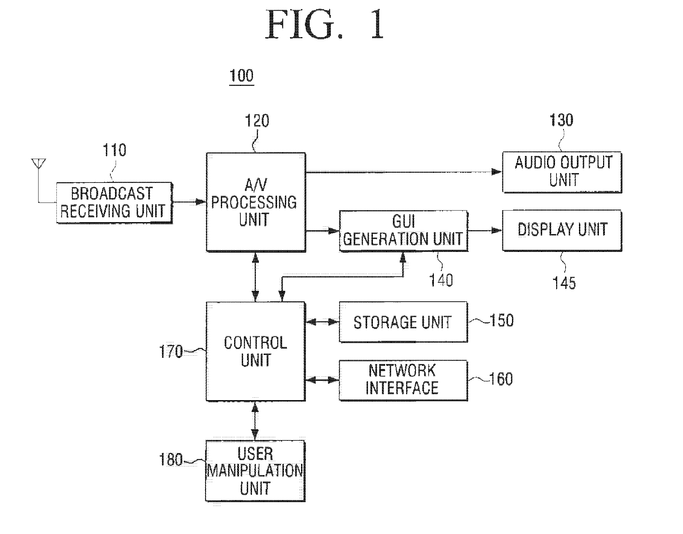

FIG. 1 is a block diagram illustrating a configuration of a television (TV) 100 according to an exemplary embodiment of the present invention. As illustrated in FIG. 1, the TV 100 may include a broadcast receiving unit 110, an audio/video (A/V) processing unit 120, an audio output unit 130, a graphical user interface (GUI) generation unit 140, a display unit 145, a storage unit 150, a network interface 160, a control unit 170, and a user manipulation unit 180.

The broadcast receiving unit 110 receives a broadcast from a broadcasting source, such as a station or a satellite, wirelessly or via a wire, and modulates the broadcast.

The A/V processing unit 120 performs signal-processing, such as video decoding, video scaling, and audio decoding, of a video signal and an audio signal input from the broadcast receiving unit 110. The A/V processing unit 120 outputs the processed video signal to the GUI generation unit 140, and outputs the processed audio signal to the audio output unit 130.

If the video signal and the audio signal are stored in the storage unit 150, the A/V processing unlit 120 stores the video signal and the audio signal in a compressed format in the storage unit 150.

The audio output unit 130 outputs the audio signal, received from the A/V processing unit 120, using a speaker or an external device which is connected to the audio output unit (130) via an external output terminal (not shown).

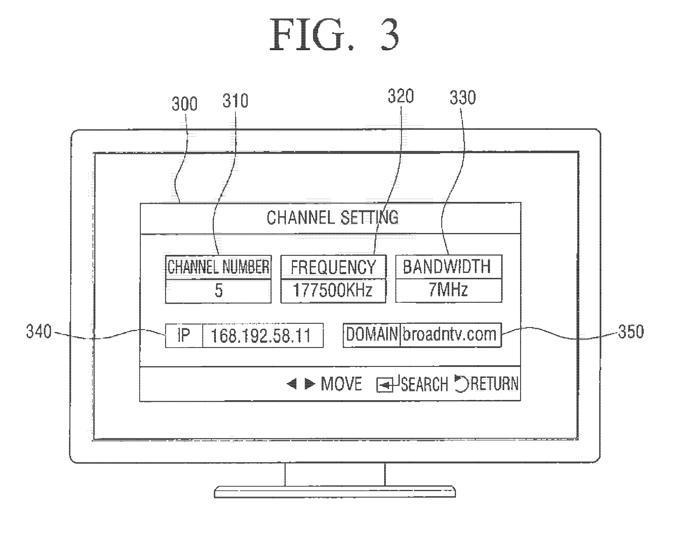

The GUI generation unit 140 generates a GUI for a user. The GUI may be displayed in an on-screen display (OSD) menu format on the display unit (145). More specifically, the GUI generation unit 140 generates GUIs, such as channel setting windows shown in FIGS 3 to 5, and channel list widows shown in FIGS, 6 and 7, which will be discussed later.

The display unit 145 displays video output by the A/V processing unit 20, and/or displays video including the GUI generated by the GUI generation unit 140.

The storage unit 150 records and stores multimedia content received by the broadcast receiving unit 110. In addition, the storage unit 150 stores multimedia content files received through the network interface 160.

The storage unit 150 also stores a channel list. The channel list indicates a list of channels, which are set by the user or which are automatically set. The channel list includes channel numbers and channel names. In addition, the channel list may include both Internet Protocol (IP) channels and broadcast channels.

IP channels are channels in which channel numbers are assigned to IP addresses or domain names by the user. That is, IP channels indicate channels for specific IP address and domain name. On the other hand, broadcast channels indicate channels in which channel numbers are to TV broadcast frequencies and bandwidths. The channel list may separately display IP channels and broadcast channels in different areas.

The storage unit 150 may be implemented as a hard disk, a nonvolatile memory, or the like.

The network interface 160 is a path for connecting the TV 100 to the Internet. That is, the network interface 160 enables the TV 100 to communicate with a communication network, such as the Internet, so the TV 100 can provide Internet services, such as an IPTV service.

The user manipulation unit 180 receivers a user command by the user's manipulation and transmits the user's command to the control unit 170. More specifically, the user manipulation unit 180 receives input to set a channel (for example, a channel number, a frequency, a bandwidth, an IP address, a domain name, or the like). The user manipulation unlit 180 may be implemented with buttons on the TV 100, a touch screen as the display unit (145), a remote control, or the like.

The control unit 170 receives the user's command based on the user's manipulation transmitted from the user manipulation unit 180, and controls the overall operation of the TV 100 according to the user's command.

More specifically, the control unit 170 receives a channel number, through the user manipulation unit 180, and at least one of an IP address and a domain name. If a search command is input through the user manipulation unit 180, the control unit 170 searches for and determines whether a server corresponding to the one of the IP address and the domain name provides an image service. If the server corresponding to the one of the IP address and the domain name, which provides an image service, is located, the control unit 170 sets the input channel number to correspond to the at least one of the IP address and the domain name.

The search command is a command which directs the control unit 170 to determine whether the input IP address or domain name is a valid IP address or domain name that is capable of providing an image service. In addition, the search command may be a command which directs the control unit 170 to determine whether a valid broadcast signal is received at a frequency and a bandwidth input by the user.

The image service is a service that provides images through the Internet, such as an IPTV service, an image streaming service, or the like.

The control unit 170 assigns a channel number to an IP address or a domain name so that image services, such as an IPTV service, can be set in the same manner as general broadcast channels.

More specifically, the control unit 170 controls the display unit 145 to displays a channel setting window including a channel number input box, a frequency input box, a bandwidth input box, an IP address input box, and a domain name input box. The control unit 170 receives a chancel number in the channel number input box, and receives at least one of an IP address and domain name in the IP address input box and the domain name input box. That is, the control unit 170 recognizes a number input in the channel number input box as a channel number, recognizes a number in the IP address input box as an IP address, recognizes information input in the domain name input box as a domain name, recognize a number input in the frequency input box as a frequency of a broadcast channel, and recognized a number input in the bandwidth input box as a bandwidth of a broadcast channel.

If an IP address is input in the IP address input box, the control unit 170 controls the domain name input box to display a domain name corresponding to the IP address. If a domain name is input in the domain name input box, the control unit 170 controls the IP address input box to display an IP address corresponding to the domain name. Accordingly, if one of the IP address and the domain name is input, the TV 100 automatically determines and inputs the other, thereby improving the user's convenience when stting an IP channel.

When a channel number is input in the channel number input box, and at least one of an IP address and domain name is input in the IP address input box and the domain name input box, if a search command is thorough the user manipulation unit 180, the control unit 170 searches for and deterimines whether a server corresponding to the at least one of the IP address and the domain name provides an image service. For example, the control unit 170 transmits an image service request message to the IP address and receives a response to the image service request message from a device at the IP address, If the response indicates that the image service is possible, the control unit 170 determines that a server at the IP address can provide the image service.

If the server can provide the image service, the control unit 170 sets the input channel number to correspond to the at least one of the IP address and domain name. For example, if it is assumed that "5" is input as a channel number, "168.192.58.11" is input as an IP address, "broadntv.com" is input as a domain name, and it is determined that the channel provides the image service, the control unit 170 associates the IP address "168.192.58.11" and the domain name "broadntv.com" with the channel number "5." If the user selects channel "5" using the user manipulation unit 180, such as a remote control, the control unit 170 accesses the server "broadntv,com" at the IP address "168.192.58.11" through the network interface 160 and receives images from the server. In this manner, the user can set IP channels through the channel setting window.

If at least one of an IP address and a domain name is input in the IP address input box and the domain name input box, the control unit 170 changes the frequency input box and the bandwidth input box into an inactivated state so at a frequency and a bandwidth cannot be input. This is because, if an IP address or a domain name is input, it is not necessary to input a frequency and a bandwidth.

When a channel number is input in the channel number input box, and a frequency and a bandwidth are input in the frequency input box and the bandwidth input box, if a search command is input, the control unit 170 searches for and determines whether a broadcast service is provide in the input frequency bandwidth.

If a broadcast service is provided in the input frequency and bandwidth, the control unit 170 sets the input channel number to correspond to the input frequency and bandwidth.

For example, if it is assumed that "6" is input as a channel number, "177500kHz" is input as a frequency, "7MHz" is input as a bandwidth, and it is determined that the channel provides the broadcast service, the control unit 170 the frequency "177500kHz" and the handwidth "7MHz" with the channel number "6." If the user selects channel "6" using the user manipulation unit 180, such as a remote control, the control unit 170 receives broadcast signals corresponding to frequency "177500kHz" and bandwidth "7MHz" through the broadcast receiving unit 110. In this manner, the user can set general broadcast channels through the channel setting window.

If at least one of a frequency and a bandwidth is input in the frequency input box and the bandwidth input box, the control unit 170 changes the IP address input box and the domain name input box into an inactivated state so that an IP address and a domain name cannot be input. This is because, if a frequency and a bandwidth is input, it is not necessary to input an IP address and domain name.

The control unit 170 combines channels generated by the user with preset channels and generates a channel list including IP channels and broadcast channels. The control unit 170 may separately display IP channels and broadcast channels on different areas.

Therefore, the user can easily view IP channels and broadcast channels at a glance. In addition, the user can select an IP channel or a broadcast channel using chancel change button on the user manipulation unit 180, As a result, the user can easily use both an IPTV service and general broadcasts.

As described above, the user can assign a channel number to an IP address or a domain name using the channel setting window of the TV 100, and can thus select and use the IPTV in a manner similar to general broadcast channels.

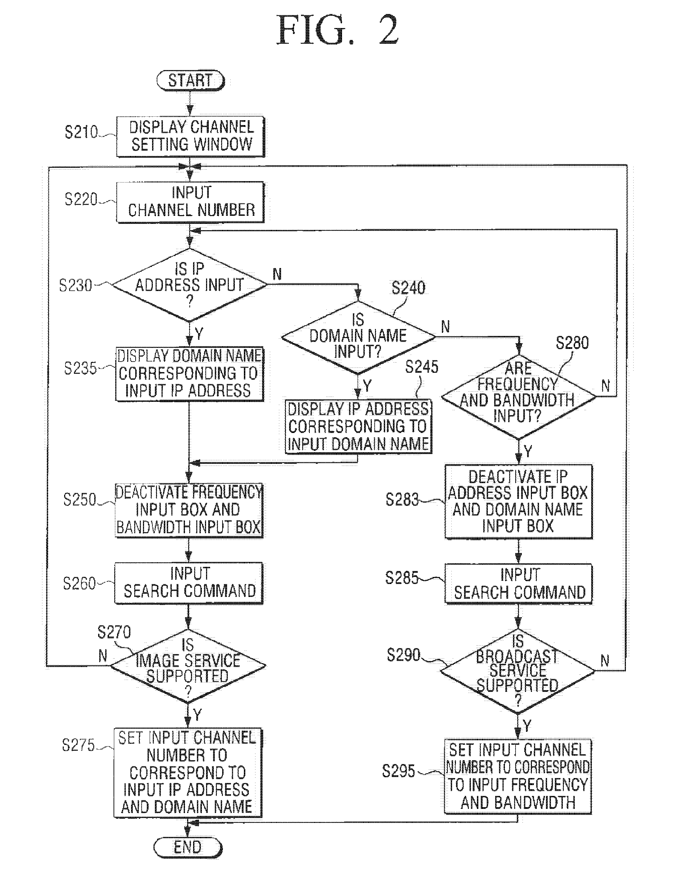

Hereinafter, a method for setting channels according to an exemplary embodiment of the present invention is described with reference to FIGS. 2 to 5. FIG. 2 is a flowchart illustrating a method for setting channels according to an exemplary embodiment of the present invention.

The TV 100 displays a channel setting window on screen (S210). The structure of the channel setting window is described in detail with reference to FIG. 3, which illustrates a screen displaying a channel setting window 300 according to an exemplary embodiment of the present invention.

As illustrated in FIG. 3, the channel setting window 300 includes a channel number input box 310, a frequency input box 320, a bandwidth input box 330, an IP address input box 340, and a domain name input box 350.

The user can manually set IP channels and broadcast channels using the channel setting window 300. IP channels indicate channels in which channel numbers are assigned to IP addresses or domain names by the user. That is, IP channels indicate channels for an IP address and/or domain names. Broadcast channels indicate channels in which channel numbers are assigned to TV broadcast frequencies and bandwidths. In other words, the user can manually set IP channels and broadcast channels with a single screen using the channel setting window 300.

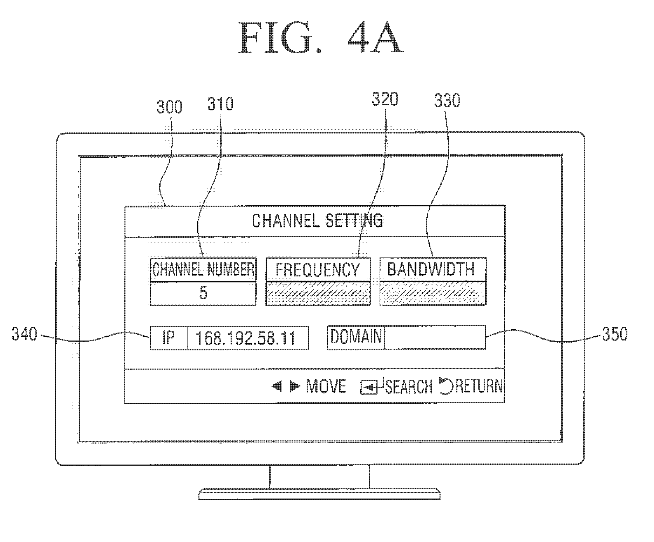

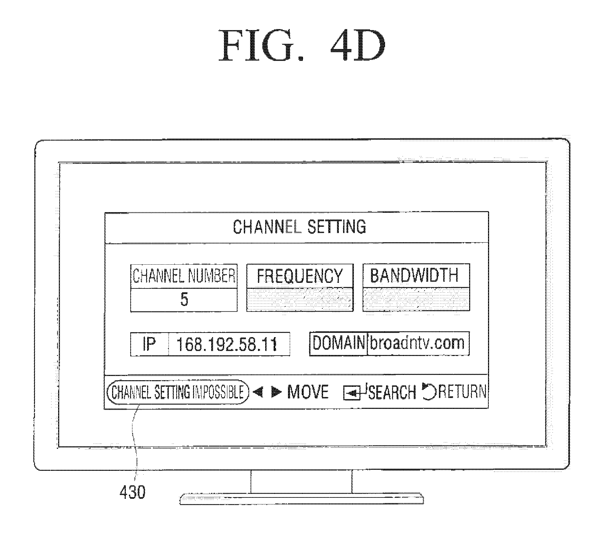

Hereinafter, operations 5220 to S275 in FIG, 2 are described with reference to FIGS. 4A and 4D. FIGS. 4A to 4D illustrate the process for searching and for setting a channel using an IP address and a domain name according to an exemplary embodiment of the present invention.

The TV 100 receives a channel number in the channel number input box 310 through the user manipulation unit 180 (S220). Referring to FIG. 4A, the user inputs channel number "5" in the number input box 310.

Subsequently, the TV 100 determines whether an IP address is input in the IP address input box 340 (S230). If an IP address is input in the IP address input box 340 (S230-Y), the TV 100 automatically display a domain name corresponding to the input IP address in the domain name input box 350 (S235).

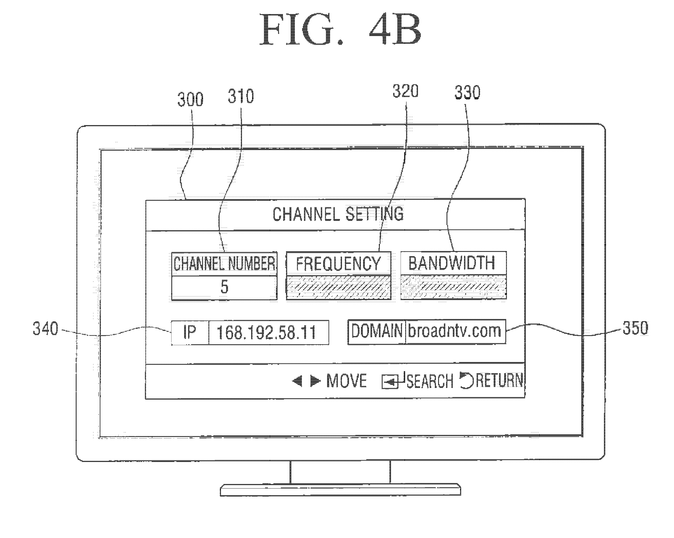

For example, if the user inputs IP address "169.192.58. 11" in the IP address input box 340 as illustrated in FIG. 4A, the TV 100 automatically displays domain name "broadntv.com" corresponding, to "169.192.58,11" in the domain name input box 350 is illustrates in FIG. 4B.

If an IP address is not input in the IP address input box 340 (S230-N), the TV 100 determines whether a domain name is input in the domain name input box 350 (S240). If a domain name is input in the domain name input box 350 (S240-Y), the TV 100 displays an IP address corresponding to the input domain name in the IP address input box 340 (S245).

As illustrated in FIGS. 4A and 4B, the TV 100 deactivates the frequency input box 320 and the bandwidth input box 330(S250). As illustrated in FIGS. 4A and 4B, the frequency input box 320 and the bandwidth input box 330 may be deactivated by graying out the frequency input box 320 and the bandwidth input box 330, thus preventing the user from entering information in the deactivated boxes. This is because if the IP address and the domain are input, it is not necessary to input frequency and bandwidth.

Subsequently, the TV 100 receives a search command through the user manipulation unit 180 (S260). The search command is a command that directs the TV 100 to search for and determine whether the IP address and domain name of the channel entered by the user are a valid IP address and domain name capable of providing an image (S270).

If the search command is input, the TV 100 determines whether the input IP address or domain name supports an image service (S270). If the input IP address and domain name supports an image service (S270-Y), the TV 100 sets the input channel number to correspond to the input IP address and domain name (S275).

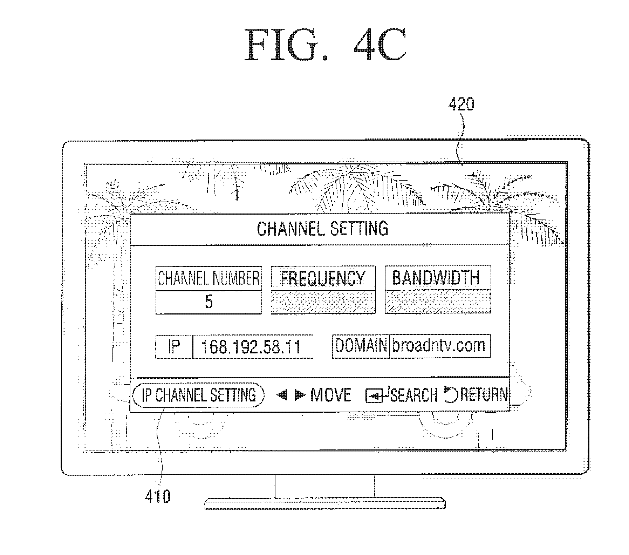

More specifically, FIG. 4C illustrates a server corresponding to the input IP address and domain name that provides an image service. As illustrated in FIG. 4C, when the server corresponding to the input IP address and domain name provides an image service, if the user inputs a search command, an image 420 is displayed on the screen, and an IP channel setting icon 410 is displayed on the channel setting window 300. Accordingly, the user can easily recognize that the input IP address and domain name provide an service. The TV 100 assigns IP address "169.192.5811" and domain name "broadntv.com" to channel number "5" so that IP channel "5" is set.

If it is determined the server corresponding to the input IP address and domain name does not support an image service (S270-N), the TV 100 returns to operation S220 so as to receive channel information again.

More specifically, FIG. 4D illustrates a server corresponding to the input IP address and domain name that does not provide an image service. As illustrated in FIG. 4D, when the server corresponding to the input IP address and domain name does not provide an image service, if the user inputs a search command, a channel setting impossible icon 430 is displayed on the channel setting window 300. Accordingly, the user can easily recognize that the server corresponding to the input IP address and domain name does not provide an image service.

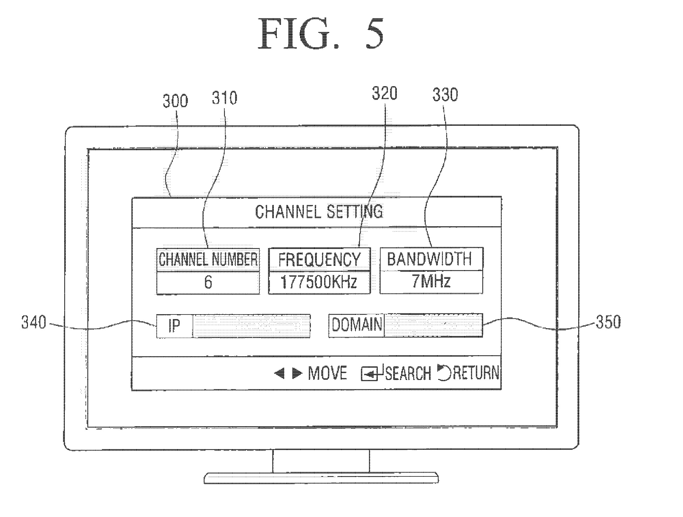

Hereinafter, operations S280 to S295 in FIG. 2 are described with reference to FIG. 5, which illustrates a screen on which an IP address input box and a domain name input box are deactivated when a frequency and a bandwidth are input according to an exemplary embodiment of the present intention

If a domain name is not input (S240-N), the TV 100 determines whether a frequency and a bandwidth are input in the frequency input box 320 and the bandwidth input box 330 (S280). If a frequency and a bandwidth are input in the frequency input box 320 and the bandwidth input box 330 (S280-Y), the TV 100 deactivates the IP address input box 340 and the domain name input box 350 (S283), thus preventing the user from entering information in the deactivated boxes. This is because, if the frequency and the bandwidth are input, it is not necessary to input an IP address and a domain name.

More specifically, FIG. 5 illustrate a screen on which the IP address input box 340 and the domain input box 350 are deactivated when the frequency and the bandwidth are input.

Subsequently, the TV 100 receives a search command through the user manipulation unit 180 (S285). The search command is commend to search for and determine whether a valid broadcast signal is received in the input frequency and bandwidth.

If the search command is input, the TV 100 determines whether a valid broadcast service is supported (that is, whether a valid broadcast signal is received) in the input frequency and bandwidth (S290). If a valid broadcast service is supported in the input frequency and bandwidth (S290-Y), the TV 100 sets the input channel number to correspond to the input frequency and bandwidth (S295). For example, as illustrated in FIG. 5, the TV 100 assigns frequency "177500kHz" and bandwidth ",7MHz" to channel number "6" so that broadcast "6" is set.

If a valid broadcast service is not supported in the input frequency and bandwidth (S290-N), the TV 100 returns to operation S220 so as to receive channel setting information again,

Following this process, the TV 100 can assign a channel number to an IP address or a domain name using the channel setting window. Accordingly, the user can select and use an IPTV in the same manner as general broadcast channels.

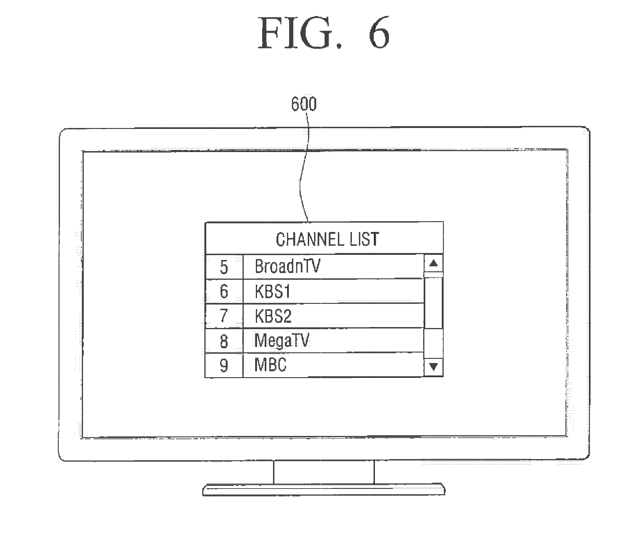

FIG. 6 illustrates a screen displacing a channel list 600 in which IP channels and broadcast channels are shown together, according to an exemplary embodiment of the present invention. If the user inputs a channel list display command using the user manipulation unit 180, the TV 100 displays the channel list 600 on screen. The displayed channel list 600 includes IP channels and broadcast channels, and the channels may be arranged in the order of channel number, as illustrated in FIG. 6.

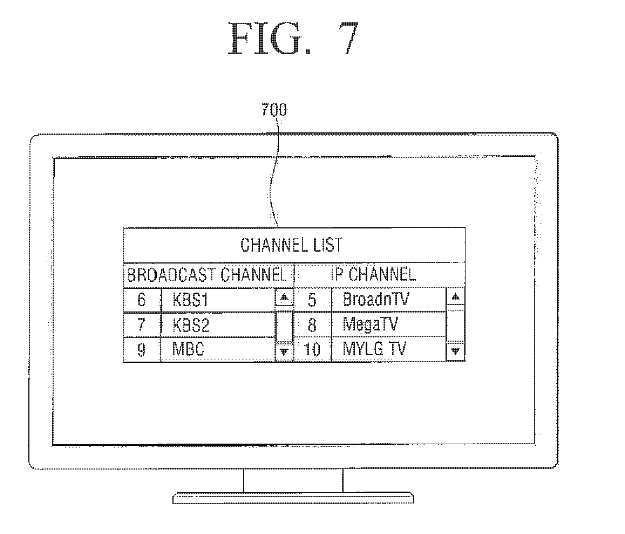

FIG. 7 illustrate a screen displaying a channel list 700 in which IP channels and broadcast channels are shown separately on different areas of the screen, according to an exemplary embodiment of the present invention. As illustrated in FIG. 7, the channel list 700 may display IP channels and broadcast channels separately in different areas.

In this exemplary embodiment of the present invention, the user directly inputs channel numbers, IP addresses and domain names, but channel numbers, IP addresses, and domain names can be input in different manners.

For example, if the user selects a channel number input box, the control unit 170 of the TV 100 may display an available channel number list (that is, a list of channel numbers which are not currently used) on the screen so that the user can select a desired channel number from the available channel number list.

If the user selects a domain name input box, the control unit 170 of the TV 100 may display an available domain name list (that is, a list of domain names of servers providing an image service) or icons, so that the user can select a desired domain name from the available domain name list or a desired icon.

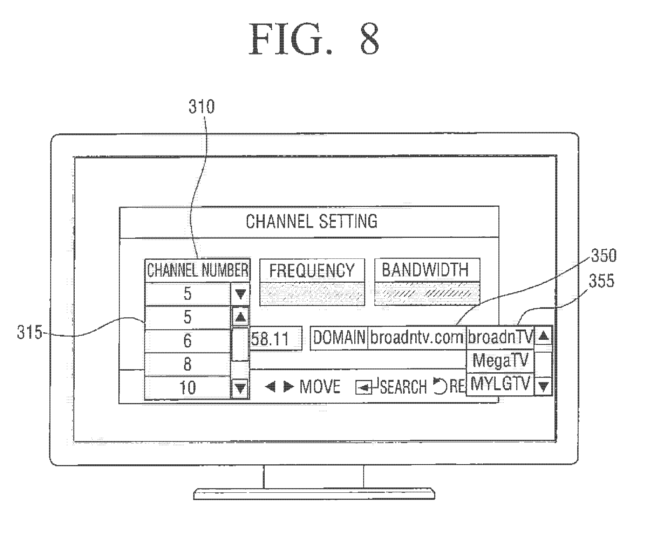

More specifically, the available channel number list and the list of domain names of servers providing an image service are described with reference to FIG. 8, which illustrates a screen displaying an available channel number list 315 and a list 355 of domain names of servers providing an image service according to an exemplary embodiment of the present invention.

As illustrated in FIG. 8, the TV 100 displays the available channel number list 315 under to channel number input box 310. Accordingly, the user can select a desired channel number from the available channel number list 315.

In addition, the TV 100 displays the list 355 of domain names of servers providing an image service, next to the domain name input box 350. Accordingly, the user can select a desired domain name from the list 355 of domain names of servers providing an image service.

As described above, the TV 100 displays IP channels and broadcast channels together in the channel list, so the user can see IP channels and broadcast channels at a glance. In addition, the user can select an IP channel and a broadcast channel the channel change button on the user manipulation unit 180. Therefore, the user can easily use an IPTV service and a general broadcast.

In the exemplary embodiments of the present invention, the broadcast receiving apparatus is a television, and may be any device capable of receiving broadcast signals and accessing the Internet. For example, the broadcast receiving apparatus may be a set-top box, a cell phone, or the like.

As can be appreciated from the above description of a method for setting channels, so that an input channel number can correspond to at least one of an input IP address and domain name, and a broadcast receiving apparatus using the same, the user can easily use an IPTV as well as general broadcast channels using a channel selection button.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for setting a channel, the method comprising:
receiving a channel number;
receiving at least one of an IP address and a domain name; and
setting the channel number to correspond to the at least one of the IP address and the domain name.

2. The method according to clam 1, further comprising:
determining whether a server corresponding to the at least one of the IP address and the domain name provides an image service,
wherein the setting the channel number comprises setting the channel number to correspond to the at least one of the IP address and the domain name if the server provides the image service.

3. The method according to claim 2, wherein the image service is an Internet Protocol Television (IPTV) service or a streaming service.

4. The method according to any one of claims 1 to 3, further comprising:
displaying a channel setting window including a channel number input box, a frequency input box, a bandwidth input box, an Internet Protocol (IP) address input box, and a domain name input box,
wherein the receiving the channel number comprises receiving the channel number using the channel number input box, and
the receiving the at least one of the IP address and the domain name comprises receiving the at least one of the IP address and the domain name using the IP address input box and the domain name input box.

5. The method according to claim 4, further comprising:
determining whether a server corresponding to the at least of the input IP address and the domain name provides an image service when a search command is input if the channel number is input in the channel number input box and if the at least one of the IP address and the domain name is input in the IP address input box and the domain name input box,
wherein the setting the channel number comprises setting the channel number to correspond to the at least one of the IP address and the domain name if the server provides the image service.

6. The method according to claim 4, further comprising:
if an IP address is input in the IP address input box, displaying a domain name corresponding to the input IP address in the domain name input box.

7. The method according to claim 4, further comprising:
if a domain name is input in the domain name input box, displaying an IP address corresponding to the input domain name in the IP address input box.

8. The method according to any one of claims 4 to 7, further comprising:
if at least one of an IP address and a domain name is input in the IP address input box and the domain name input box, changing the frequency input box and the bandwidth input box into an inactivate state.

9. The method according to any one of claims 4 to 8, further comprising:
when a search command is input if the channel number is input in the channel number input box and if a frequency and a bandwidth is input in the frequency input box and the bandwidth input box, determining whether a broadcast service is provided in the frequency and the bandwidth,
wherein the setting the channel number comprises setting the channel number to correspond to the frequency and the bandwidth if the broadcast service is provided in the frequency and the bandwidth.

10. The method according to any one of claims 4 to 9, further comprising:
if at least one of a frequency and a bandwidth is input in the frequency input box and the bandwidth input box, changing the IP address input box and the domain name input box into an inactivate state.

11. The method according to any one of claims 1 to 10, further comprising:
generating a channel list including IP channels and broadcast channels.

12. The method according to claim 11, wherein the generating the channel list comprises generating the channel list in which the IP channels and the broadcast channels are displayed separately in different areas.

13. The method according to any one of claims 1 to 12, further comprising:
displaying a list of channel numbers, which are not in use; and
displaying a list of domain names of servers providing an image service,
wherein the receiving the channel number comprises if a user selects an item from the list of channel numbers, receiving the channel number corresponding to the selected item, and
the receiving the at least one of the IP address and the domain name comprises if the user selects an item from the list of domain names, receiving a domain name and an IP address corresponding to the selected item.

14. A broadcast receiving apparatus comprising:
a user manipulation unit which receives a user's manipulation; and
a control unit which receives a channel number and receives at least one of an IP address and a domain name through the user manipulation unit, and sets the channel number to correspond to the at least one of the IP address and the domain name.

15. The broadcast receiving apparatus according to claim 14, wherein the control unit determines whether a server corresponding to the at least one of the IP address and the domain name provides an image service, and sets the channel number to correspond to the at least one of the IP address and the domain name if the server provides the image service.
